Europäisches Patentamt

European Patent Office

Office européen des brevets

(19)

(11) Veröffentlichungsnummer: **0 017 157**
**B1**

(12)

# EUROPÄISCHE PATENTSCHRIFT

(45) Veröffentlichungstag der Patentschrift:
**28.09.83**

(21) Anmeldenummer: **80101598.3**

(22) Anmeldetag: **26.03.80**

(51) Int. Cl.³: **F 23 L 15/04,** F 23 D 13/42,
F 28 F 21/04

(54) Keramischer Rekuperator zur Erhitzung von Verbrennungsluft.

(30) Priorität: **29.03.79 DE 2912520**

(43) Veröffentlichungstag der Anmeldung:
**15.10.80 Patentblatt 80/21**

(45) Bekanntmachung des Hinweises auf die Patenterteilung:
**28.09.83 Patentblatt 83/39**

(84) Benannte Vertragsstaaten:
**AT BE CH FR GB IT LU NL SE**

(56) Entgegenhaltungen:
**DE-A-1 615 278**
**DE-A-2 364 455**
**US-A-2 895 719**

(73) Patentinhaber: **Kernforschungsanlage Jülich Gesellschaft mit beschränkter Haftung, Postfach 1913, D-5170 Jülich (DE)**

(72) Erfinder: **Förster, Siegfried, Dr., Ottenfeld 1, D-5110 Alsdorf (DE)**
Erfinder: **Sack, Berthold, Am Weissenberg 36, D-5100 Aachen (DE)**

## Keramischer Rekuperator zur Erhitzung von Verbrennungsluft

Die Erfindung bezieht sich auf einen keramischen Rekuperator zur Erhitzung von Verbrennungsluft, der einem Brenner zur Erzeugung eines zündfähigen Brennstoff-Luft-Gemisches vorgeschaltet ist, wie er z. B. aus der DE-B-2 707 290 bekannt ist.

Keramische Rekuperatoren dieser Art dienen vor allem der Vorwärmung von Verbrennungsluft von Ölbrennern, bei denen durch Verdunsten des Brennstoffes in der vorerwärmten Verbrennungsluft Brennstoff und Luft gut vermischt und hohe Brennerleistungen erzielt werden. Während des Betriebes des Ölbrenners wird zur Vorwärmung der Verbrennungsluft das aus dem Brennraum abströmende Abgas genutzt. Für den Kaltstart des Ölbrenners steht heißes Abgas jedoch noch nicht zur Verfügung. Bis zum Erreichen der Betriebstemperatur ist es daher erforderlich, die Verbrennungsluft in anderer Weise vorzuwärmen, um schon bei Inbetriebnahme des Ölbrenners die für den Verbrennungsprozeß erforderliche Verdunstung des Brennstoffes zu gewährleisten.

Aufgabe der Erfindung ist es, einen von Verbrennungsluft und Abgas durchströmbaren Rekuperator zu schaffen, der zugleich zur Vorwärmung der Verbrennungsluft beim Kaltstart geeignet ist.

Diese Aufgabe wird bei einem keramischen Rekuperator der vorgenannten Art gemäß der Erfindung durch die im Patentanspruch 1 gekennzeichneten Merkmale gelöst. Der Rekuperator weist eine Heizung zur Vorwärmung der Wände der die Verbrennungsluft führenden Kanäle auf. Die Heizung ist vor dem Eintritt von Verbrennungsluft einschaltbar und erhitzt die Wände der Kanäle so weit, daß die danach die Kanäle durchströmende Verbrennungsluft auf die für die Verdunstung des Brennstoffes erforderliche Temperatur erwärmt wird. Nach Erreichen der Betriebstemperatur im Verbrennungsraum und entsprechend hoher Abgastemperatur wird die Beheizung der Wände der Kanäle wieder abgeschaltet.

Bevorzugt ist als Heizeinrichtung eine elektrische Widerstandsheizung vorgesehen. Hierfür kann in einfachster Weise ein durch die die Verbrennungsluft führenden Kanäle verlegter Heizdraht verwendet werden. Der Heizdraht kann aber auch durch die abgasführenden Kanäle verlegt sein. Zweckmäßig ist eine auf die Außenseite des keramischen Rekuperators aufgesetzte Widerstandsheizung. Sie kann Heizplatten aufweisen oder aus einem spiralförmig um den Rekuperator gewickelten Heizdraht bestehen. Mit einer solchen Heizung wird der Rekuperator insgesamt erhitzt, so daß zur Vorwärmung der Verbrennungsluft beim Kaltstart eine ausreichende Wärmequelle zur Verfügung steht. Besonders vorteilhaft ist es, für die Wände der Kanäle keramische Werkstoffe zu verwenden, die elektrisch leitend sind. In diesem Fall bildet der Rekuperator ohne zusätzliche Maßnahmen unmittelbar selbst den Heizwiderstand.

Die Erfindung wird im folgenden anhand von in der Zeichnung wiedergegebenen Ausführungsbeispielen näher erläutert. Es zeigt im einzelnen

Fig. 1 keramischen Rekuperator mit in die Verbrennungsluft führenden Kanälen eingeführtem Heizdraht,

Fig. 2 keramischen Rekuperator mit auf dem Umfang angebrachter elektrischer Heizung,

Fig. 3 keramischen Rekuperator aus elektrisch leitendem keramischen Werkstoff.

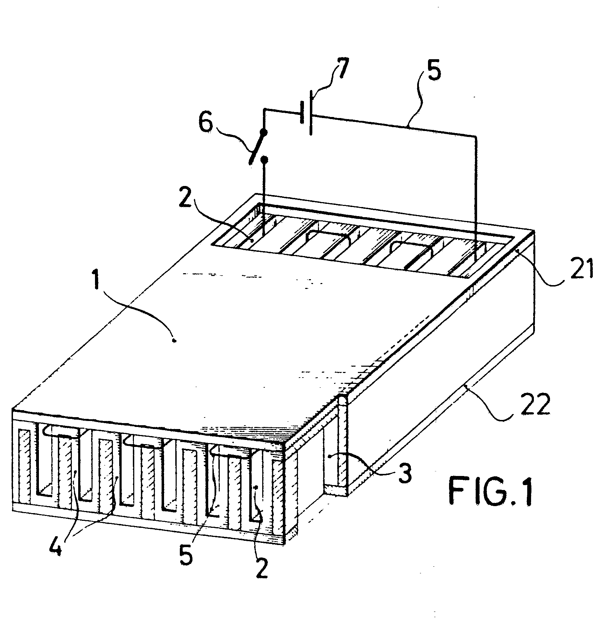

Wie aus der Zeichnung ersichtlich ist, besteht im Ausführungsbeispiel der keramische Rekuperator aus einem einstückigen keramischen Bauteil 1 mit rechteckigem Querschnitt, das in seiner Längsrichtung parallel verlaufende Kanäle 2, 3 aufweist, von denen die Kanäle 2 zur Führung der Verbrennungsluft, die Kanäle 3 zur Führung von Abgas dienen. Von den Kanälen 3 ist der Übersichtlichkeit halber nur das Kanalende im Schnitt dargestellt, Fig. 1. Die Kanäle 2 und 3 verlaufen im Bauteil 1 parallel zueinander und weisen gemeinsame Wände 4 auf.

In den Kanälen 2 befinden sich im Ausführungsbeispiel nach Fig. 1 elektrische Heizdrähte 5. Die Heizdrähte sind durch Betätigen des Schalters 6 an eine Stromquelle 7 anschließbar, bevor Verbrennungsluft die Kanäle 2 durchströmt. Die Heizleistung der Heizung wird in üblicher Weise von den Abmessungen der Heizdrähte bestimmt. Zur Aufheizung der Wände 4 zwischen den Kanälen 2, 3 lassen sich auch Heizdrähte in den das Abgas führenden Kanälen 3 anbringen, die in Fig. 1 nicht gezeigt sind. Eine gesonderte Isolierung der Heizdrähte ist innerhalb des keramischen Rekuperators nicht erforderlich, da er selbst elektrisch isolierend wirkt. Die Heizdrähte können, wie in Fig. 1 ausgeführt, als ein Strang, aber auch mehrsträngig geführt sein.

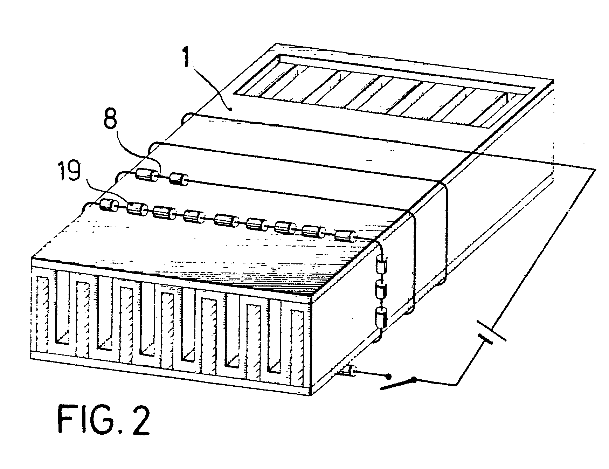

Fig. 2 zeigt einen keramischen Rekuperator mit einer um die Außenseite des Bauteils 1 herum angeordneten Heizung. In einfachster Weise ist um den Bauteil 1 herum ein nach außen isolierter Heizdraht 8 gewickelt.

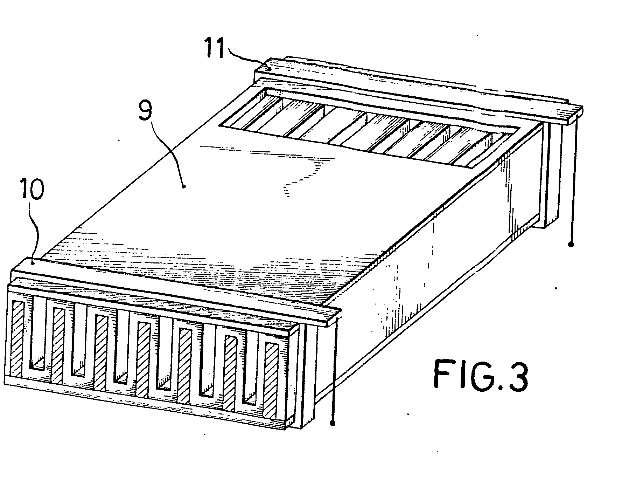

Ein Ausführungsbeispiel eines Rekuperators, der aus elektrisch leitendem keramischen Werkstoff besteht, zeigt Fig. 3. Der Rekuperator 9, der im übrigen dem Bauteil 1 der Ausführungsbeispiele nach Fig. 1 und 2 entspricht, weist an seinen beiden Stirnseiten Elektroden 11, 10 auf. Zur Aufheizung des Rekuperators sind die Elektroden mit einer Stromquelle verbindbar, die in Fig. 3 nicht gesondert dargestellt ist. Ein in dieser Weise ausgebildeter keramischer Rekuperator läßt sich vorteilhaft sehr gleichmäßig aufheizen. Als Werkstoff ist beispielsweise Siliziumcarbid geeignet.

Mit der elektrischen Beheizung des keramischen Rekuperatorelementes läßt sich beispielsweise ein ca. 1 kg Masse aufweisendes Bauteil für einen Ölbrenner mit einer Heizleistung von etwa 20 000 kcal/h bei Installation einer Heizung mit einer Leistung von 2000 W in etwa einer Minute auf 200°C vorwärmen. Diese Temperatur entspricht bei Heizöl der für die Bildung eines zündfähigen Brennstoff-Luft-Gemisches erforderlichen Temperatur.

**Patentansprüche**

1. Keramischer Rekuperator zur Erhitzung von Verbrennungsluft, der einem Brenner zur Erzeugung eines zündfähigen Brennstoff-Luft-Gemisches vorgeschaltet ist, dadurch gekennzeichnet, daß der Rekuperator eine vor Eintritt von Verbrennungsluft einstellbare Heizung (5, 8, 10, 11) zur Vorwärmung von die Verbrennungsluft leitenden Kanälen (2) aufweist.

2. Keramischer Rekuperator nach Anspruch 1, dadurch gekennzeichnet, daß als Heizung eine elektrische Widerstandsheizung (5, 8, 10, 11) vorgesehen ist.

3. Keramischer Rekuperator nach Anspruch 2, dadurch gekennzeichnet, daß die Wände (4) der Kanäle (2) aus einem elektrisch leitenden, keramischen Werkstoff bestehen.

**Claims**

1. Ceramic recuperator for the heating of combustion air, which is arranged upstream of a burner for producing an ignitable fuel-air-mixture, characterised in that the recuperator comprises a heating device (5, 8, 10, 11) adapted to be switched on before combustion air enters, for the pre-heating of ducts (2) conducting the combustion air.

2. Ceramic recuperator according to claim 1, characterised in that an electrical resistance heating device (5, 8, 10, 11) is provided as the said heating device.

3. Ceramic recuperator according to claim 2, characterised in that the walls (4) of the ducts (2) consist of an electrically conductive ceramic material.

**Revendications**

1. Récupérateur en céramique pour le chauffage de l'air de combustion, qui est monté en amont d'un brûleur pour la production d'un mélange inflammable de combustible et d'air, caractérisé en ce que le récupérateur présente, un dispositif de chauffage (5, 8, 10, 11) réglable avant l'entrée de l'air de combustion, pour préchauffer les canaux (2) dans lesquels l'air de combustion est guidé.

2. Récupérateur en céramique suivant la revendication 1, caractérisé en ce que, comme dispositif de chauffage, est prévu un dispositif de chauffage électrique par résistance (5, 8, 10, 11).

3. Récupérateur en céramique suivant la revendication 2, caractérisé en ce que les parois (4) des canaux (2) sont en un matériau céramique conducteur de l'électricité.

FIG.1

FIG. 2

11

9

10

FIG.3